# EUROPÄISCHE PATENTSCHRIFT

(11) **EP 2 171 101 B1**
(45) Veröffentlichungstag und Bekanntmachung des Hinweises auf die Patenterteilung: **14.01.2015**
(21) Anmeldenummer: 08761112.5
(22) Anmeldetag: 17.06.2008
(51) Int. Cl.: C21B 5/06, C21B 7/00, F27B 1/16, F27B 1/26, F27D 17/00

(54) **SCHACHTOFEN UND VERFAHREN ZUM BETREIBEN EINES SCHACHTOFENS**
SHAFT FURNACE AND METHOD FOR OPERATING A FURNACE
FOUR À CUVE ET SON PROCÉDÉ DE FONCTIONNEMENT

(30) Priorität: 26.06.2007 DE 102007029629
(43) Veröffentlichungstag der Anmeldung: 07.04.2010
(73) Patentinhaber: Thyssenkrupp At.Pro Tec Gmbh, 45143 Essen (DE)
(72) Erfinder: KÖNIG, Gerd, 46535 Dinslaken (DE); KÖNIG, Wolfram, 49477 Ibbenbüren (DE); BABICH, Alexander, 52066 Aachen (DE); SENK, Dieter Georg, 52066 Aachen (DE); GUDENAU, Heinrich-Wilhelm, 52074 Aachen (DE); HELDT, Hans-Heinrich, 41747 Viersen (DE)
(74) Vertreter: Michalski Hüttermann & Partner Patentanwälte mbB
(86) Internationale Anmeldenummer: PCT/EP2008/057624
(87) Internationale Veröffentlichungsnummer: WO 2009/000704

(56) Entgegenhaltungen:
- WO-A-01/36891
- WO-A-2007/054308
- DE-A1- 10 117 962
- GB-A- 950 071
- GB-A- 1 247 417
- DONSKOV: "Investigation of blast furnace operation with imposed pulsations in top pressure" STEEL IN THE USSR, Bd. 6, Nr. 2, 1976, Seiten 55-57, XP001409346
- KUZUB A G ET AL: "BLAST-FURNACE MELTING WITH CYCLIC VARIATIONS IN THE GAS PRESSURE IN THE TUYERE ZONE AND THE TOP", METALLURGIST, SPRINGER NEW YORK LLC, UNITED STATES, RUSSIAN FEDERATION, vol. 22, no. 3/4, 1 March 1978 (1978-03-01), pages 225-227, XP001408486, ISSN: 0026-0894

## Beschreibung

Die Erfindung betrifft einen Schachtofen sowie ein Verfahren zum Betreiben eines Schachtofens, der beispielsweise als Hochofen, Kupolofen, Imperial-Smelter oder Müllverbrennungsofen eingesetzt werden kann.

Für die Produktion von Primärschmelze von Eisen wird überwiegend ein als, Hochofen ausgestalteter Schachtofen als Hauptaggregat eingesetzt, wobei andere Verfahren lediglich einen entsprechenden Anteil von nur etwa 5 % haben. Dieser Schachtofen kann nach dem Gegenstromprinzip arbeiten. Rohmaterialien wie Möller und Koks werden an dem oberen Bereich des Schachtofens der Gicht chargiert und sinken im Schachtofen nach unten. In einem unteren Bereich des Ofens (Blasformebene) wird ein Behandlungsgas (so genannter Wind mit je nach Größe des Ofens einem Volumen von 800-1 100 m³/tRE) durch Blasformen in den Ofen eingeblasen. Dabei reagiert der Wind, bei dem es sich üblicherweise um vorab in Winderhitzern auf etwa 1000 bis 1300°C erhitzte Luft handelt, mit dem Koks, wobei u. a. Kohlenmonoxid erzeugt wird. Das Kohlenmonoxid steigt im Ofen auf und reduziert die im Möller enthaltenen Eisenoxide und weitere Eisenverbindungen.

Darüber hinaus werden üblicherweise noch Ersatzreduktionsmittel mit beispielsweise 100-200 kg/tRE (z. B. Kohlenstaub, Öl, Erdgas oder Kunststoff) mit in den Ofen eingeblasen, was die Erzeugung von Reduktionsgas fordert.

Zusätzlich zur Reduktion der Eisenerze schmelzen die Rohmaterialien aufgrund der bei den im Schachtofen auftretenden chemischen Prozessen erzeugten Wärme. Die Gasverteilung über den Querschnitt des Schachtofens ist allerdings ungleichmäßig. So bildet sich im Zentrum des Schachtofens der so genannte "tote Mann" aus, während sich die relevanten Prozesse wie die Vergasung (Reaktion von Sauerstoff mit Koks oder Ersatzreduktionsmitteln zu Kohlenmonoxid und Kohlendioxid) lediglich in der so genannten Wirbelzone abspielt, die ein Bereich vor einer Blasform ist, also bezüglich des Querschnitts des Ofens nur in einem Randbereich gelegen ist. Die Wirbelzone besitzt eine Tiefe zur Ofenmitte von etwa 1 m und ein Volumen von etwa 1,5 m³. Üblicherweise sind in der Blasformebene mehrere Blasformen umfänglich derart angeordnet, dass sich die vor jeder Blasform gebildete Wirbelzone mit den links und rechts gebildeten Wirbelzonen überlappt oder nahe beieinander liegt, so dass der aktive Bereich im wesentlichen durch einen kreisringförmigen Bereich gegeben ist. Es bildet sich beim Betrieb des Schachtofens die so genannte "raceway" oder Wirbelzone aus.

Weiter kann der Heißwind üblicherweise mit Sauerstoff angereichert werden, um die eben beschriebenen Prozesse (Vergasung in der Wirbelzone, Reduktion der Eisenerze) zu intensivieren, was zu einer Erhöhung der Leistung des Schachtofens führt. Dabei kann beispielsweise der Heißwind vor dem Einleiten mit Sauerstoff angereichert werden, oder auch reiner Sauerstoff getrennt zugeführt werden, wobei zur getrennten Zuführung eine so genannte Lanze vorgesehen werden kann, d.h. ein Rohr welches sich z.B. innerhalb der Blasform, welche ja ebenfalls ein rohrartiges Teil ist, erstreckt und innerhalb der Blasform in den Ofen mündet. Insbesondere bei modernen Hochöfen, die mit niedrigem Kokssatz betrieben werden, wird der Heißwind entsprechend hochgradig mit Sauerstoff angereicht. Auf der anderen Seite werden durch die Zugabe von Sauerstoff die Produktionskosten erhöht, so dass die Effizienz eines modernen Schachtofens nicht einfach durch eine entsprechend immer weiter erhöhte Sauerstoffkonzentration erhöhbar ist.

Es ist weiter bekannt, dass die Effizienz, also der Wirkungsgrad eines modernen Schachtofens mit der so genannten Durchgasung im Schachtofen korreliert ist. Damit ist im Allgemeinen gemeint, wie gut die Vergasung in der Wirbelzone die Reduktion der Eisenerze und generell der Durchzug der im Schachtofen herrschenden Gasphase von der Blasformebene nach oben zur Gicht funktioniert, wo dann das so genannte Gichtgas abgeleitet wird. Ein Anzeichen für eine bessere Durchgasung ist etwa ein möglichst geringer Druckverlust im Ofen.

Aus WO 2007/054308 A2 ist es bekannt einen entsprechend ausgestalteten Schachtofen derart zu betreiben, dass das im unteren Bereich des Hochofens eingeleitete Behandlungsgas in kurzen zeitlichen Abständen gepulst wird. Der Druck und/oder der Volumenstrom des Behandlungsgases werden innerhalb einer Zeitspanne von kleiner als 40s variiert, wodurch die Durchgasung des Schachtofens und damit die Effizienz des Schachtofens verbessert werden. Ferner kann das Behandlungsgas vor dem Einleiten mit unterschiedlichen Drücken auf die verschiedene Blasformen in der Blasformebene verzweigt werden, um in verschiedenen Sektoren der Blasformebene unterschiedliche Randbedingungen einstellen zu können.

Es existiert jedoch ein beständiges Bedürfnis die Effizienz des Schachtofens weiter zu verbessern.

Es ist die Aufgabe der Erfindung ein Verfahren und einen Schachtofen mit verbesserter Effizienz zu schaffen.

Die Lösung der Aufgabe erfolgt erfindungsgemäß durch ein Verfahren mit den Merkmalen des Anspruchs 1 und einen Schachtofen mit den Merkmalen des Anspruchs 10. Vorteilhafte Ausgestaltungen der Erfindung sind in den Unteransprüchen angegeben.

Bei dem erfindungsgemäßen Verfahren zum Betreiben eines Schachtofens wird ein oberer Bereich des Schachtofens mit Rohmaterialien beschickt, die unter Einfluss der Schwerkraft im Schachtofen absinken. Ein Teil der Rohmaterialien wird unter Einwirkung der innerhalb des Schachtofens herrschenden Atmosphäre geschmolzen und/oder zumindest teilweise reduziert. In einem unteren Bereich des Schachtofens wird über mindestens eine untere Einleitungsöffnung ein Behandlungsgas eingeleitet, das die innerhalb des Schachtofens herrschende Atmosphäre zumindest teilweise beeinflusst. Die Einleitung des unteren Behandlungsgases wird derart dynamisch moduliert, dass bei der Modulation die Betriebsgrößen Druck p₁ und/oder Volumenstrom V̇₁ zumindest zeitweise innerhalb einer Zeitspanne von ≤ 40 s, insbesondere ≤ 20 s, bevorzugt ≤ 5 s und besonders bevorzugt ≤ 1 s variiert werden. Erfindungsgemäß wird über mindestens eine zur unteren Einleitungsöffnung beabstandete Zusatzöffnung ein Zusatzgas eingeleitet wird, deren Betriebsgrößen Druck p₂ und/oder Volumenstrom V̇₂ zumindest zeitweise variiert werden. Die Variation der Betriebsgrößen des Zusatzgases und/oder des Gichtgases erfolgt erfindungsgemäß derart, dass sich im Inneren des Schachtofens der Druck p₁ und/oder der Volumenstrom V̇₁ zumindest teilweise erhöht. Für einen Abstand d zwischen der unteren Einleitungsöffnung und der Zusatzöffnung bezogen auf eine Höhe h zwischen der unteren Einleitungsöffnung und einer oberen Ausgangsöffnung des Schachtofens gilt 0,1 ≤ d/h ≤ 1,0. Vorzugsweise werden über eine mit dem Inneren des Schachtofens verbundene Gichtgasleitung zur Abfuhr gasförmiger Reaktionsprodukte ein Gichtgas abgeleitet, deren Betriebsgrößen Druck p₃ und/oder Volumenstrom V̇₃ zumindest zeitweise variiert werden. Beispielsweise können sich innerhalb des Schachtofens die Drücke p₁ und p₂ und/oder die Volumenströme V̇₁ und V̇₂ zumindest teilweise addieren. Insbesondere addieren sich die über einem durchschnittlichen Mittelwert und/oder Grundwert liegenden Anteile des Druckverlaufs der Drücke p₁ und p₂ und/oder des Volumenstromverlaufs der Volumenströme V̇₁ und V̇₂. Entsprechend können sich, wenn beispielsweise die Gichtleitung zumindest teilweise verschlossen wird, ein Teil des ansonsten abgeführten Volumenstroms V̇₃ oder ein Teil des durch die Stauung des Gichtgases aufgeprägten Drucks p₃ mit dem im Inneren des Schachtofens vorherrschenden Drucks p₁ und/oder Volumenstroms V̇₁ addieren.

Es hat sich herausgestellt, dass durch die zusätzliche Variation des Drucks und/oder des Volumenstroms in Teilbereichen des Schachtofens eine zusätzliche Verstärkung des Drucks und/oder Volumenstroms erfolgt, die zu einer verbesserten Effizienz des Schachtofens führt. Es wird angenommen, dass sich die Verweilzeit des Behandlungsgases erhöht, wodurch der Wirkungsgrad des Schachtofens verbessert werden kann. Eine Verbesserung der Effizienz kann daher bereits erreicht werden, wenn lediglich kurzzeitig und mit großem zeitlichem Abstand eine Addition der Drücke und/oder Volumenströme erfolgt. Bevorzug wird die Einleitung des Zusatzgases und/oder die Ableitung des Gichtgases derart dynamisch moduliert, dass bei der Modulation die Betriebsgrößen Druck p₂ und/oder Volumenstrom V̇₂ und/oder Druck p₃ und/oder Volumenstrom V̇₃ zumindest zeitweise innerhalb einer Zeitspanne von ≤ 40 s, insbesondere ≤ 20 s, bevorzugt ≤ 5 s und besonders bevorzugt ≤ 1 s variiert werden. Dadurch erfolgen die Druck- und/oder Volumenstrom-Verstärkungen besonders häufig und in kurzen zeitlichen Abständen, so dass der Wirkungsgrad des Schachtofens besonders stark verbessert werden kann.

Vorzugsweise beträgt die Amplitude der Drücke p₁ und/oder p₂ und/oder p₃ und/oder der Volumenströme V̇₁ und/oder V̇₂ und/oder V̇₃ bezogen auf den Mittelwert 10% - 1000%, insbesondere 10% - 400%, vorzugsweise 10% - 200% und besonders bevorzugt 10% - 100%. Derartige Änderungen der Amplitude des Druck- und/oder Volumenstrom-Verlaufs sind für eine signifikante Verbesserung des Wirkungsgrads des Schachtofens bereits ausreichend ohne bauartbedingte zulässige Maximalwerte zu überschreiten.

Besonders bevorzugt werden die Drücke p₁ und/oder p₂ und/oder p₃ und/oder der Volumenströme V̇₁ und/oder V̇₂ und/oder V̇₃ derart variiert, dass innerhalb des Schachtofens eine überlagerte Schwingung mit einer Phasendifferenz ϕ von -π/2 ≤ ϕ ≤ π/2, insbesondere -π/4 ≤ ϕ ≤ π/4 und vorzugsweise ϕ = 0 ± π/90 entsteht. Dabei kann insbesondere die Geschwindigkeit des strömenden Gases in dieser Phasenbeziehung über eine experimentell zu ermittelnde mittlere Verweilzeit des Gases im Schachtofen (üblicherweise 3 bis 20 s) berücksichtigt werden, damit sich im Inneren des Schachtofens die gewünschte Phasendifferenz einstellt. Die Verstärkung der Amplitude der Druck-und/oder Volumenstrom-Verläufe wird dadurch besonders stark und eine gegenseitige Auslöschung der Betriebsgrößen-Schwankungen wird vermieden.

Vorzugsweise erfolgt die Modulation des Behandlungsgases und/oder des Zusatzgases und/oder des Gichtgases quasi-periodisch, insbesondere periodisch, vorzugsweise harmonisch, wobei für die Periodendauer T 40 s ≥ T ≥ 60 ms, insbesondere 20 s ≥ T ≥ 100 ms vorzugsweise 10 s ≥ T ≥ 0,5 s und besonders bevorzugt 5 s ≥ T ≥ 0,7 s gilt. Dies kann durch eine einfache sinusförmige Modulation f(t) = f₀ + Δf sin (2 πt/T + ϕ) in einfacher Weise erreicht werden. Dies erleichtert es die Druck- und/oder Volumenstrom-Schwingungen zu erzeugen und zu überlagern.

Ferner kann die Modulation des Behandlungsgases und/oder des Zusatzgases und/oder des Gichtgases insbesondere pulsationsartig erfolgt, wobei für eine Pulsbreite σ eines Pulses 5 s ≥ σ ≥ 1 ms insbesondere 0,7 s ≥ σ > 25 ms, bevorzugt 0,1 s ≥ σ > 30 ms und besonders bevorzugt 55 ms > σ ≥ 35 ms gilt. Eine solche Modulation ist etwa durch eine Funktion f(t) = f₀ + ∑ᵢ δ(t-tᵢ) charakterisiert, wobei δ(t) allgemein einen Puls beschreibt, d.h. wiederkehrenden Pulsspitzen gegenüber einem im Wesentlichen konstanten Hintergrund. Die Pulse selbst können Rechteckpulse, Dreieckpulse, gaußartige Pulse (aufgebreiteter mathematischer δ-Puls) sein oder ähnliche Pulsformen besitzen, wobei insbesondere die Pulsbreite δ von Bedeutung ist, bei der es sich um die Pulsbreite bei halber Pulshöhe handelt. In einer bevorzugten Verfahrensgestaltung weisen die periodischen Pulsationen ein Verhältnis Pulsbreite δ zu Periodendauer T von 10⁻⁴ ≤ δ/T ≤ 0,5, bevorzugt 10⁻³ ≤ δ/T ≤ 0,2, insbesondere 10⁻² ≤ δ/T ≤ 0,1. Die Druck- und/oder Volumenstrom-Änderung erfolgt dadurch besonders plötzlich, so dass (quasi-) stationäre Strömungen, die zu Bachbildungen mit geringer Durchmischung führen könnten, vermieden werden. Ferner gelingt mit ihnen eine Einflussnahme auf Prozesse, die im Schachtofen mit entsprechend geringen Reaktionszeiten ablaufen.

In einer bevorzugten Ausführungsform erfolgt die Verstärkung der Druck- und/oder VolumenstromSpitzen nicht nur in zeitlicher sondern auch in räumlicher Hinsicht. Vorzugsweise gilt hierzu für einen Abstand d zwischen der unteren Einleitungsöffnung und der Zusatzöffnung bezogen auf eine Höhe h zwischen der unteren Einleitungsöffnung und einer oberen Ausgangsöffnung des Schachtofens 0,25 ≤ d/h ≤ 1,0, vorzugsweise 0,5 ≤ d/h ≤ 1,0, besonders bevorzugt 0,75 ≤ d/h ≤ 1,0 und weiter bevorzugt 0,9 ≤ d/h ≤ 1,0. Eine messbare Verbesserung der Effizienz des Schachtofens stellt sich bereits bei vergleichsweise geringen Abständen der unteren Einleitungsöffnung zur Zusatzöffnung ein. Eine stärkere Effizienz-Verbesserung ergibt sich jedoch, wenn die Abstände zu einander stärker beabstandet sind, da Druckverluste über die Höhe des Schachtofens besser ausgeglichen werden können ohne einen zulässigen Maximaldruck zu überschreiten. Insbesondere können mehrere, das heißt zwei oder mehr Zusatzöffnungen auf unterschiedlichen Höhen des Schachtofens angeordnet sein, wobei die Höhenabstände zwischen den Öffnungen jeweils gleich sein können. Durch die gleichmäßige Verteilung der Öffnungen über der Höhe des Schachtofens lassen sich die Überlagerungen der Druck- und/oder Volumenstrom-Schwingungen besonders einfach einstellen und auftretende Druckverluste ausgleichen.

In einer bevorzugten Ausführungsform ist eine Tauchleitung vorgesehen, die in das Innere des Schachtofens eintaucht und auf einer definierten Höhe des Schachtofens die Zusatzöffnung ausbildet. Dadurch ist es möglich sowohl von außen als auch von Innen Gas einzublasen, deren Druck- und/oder Volumenstrom-Änderungen sich überlagern können.

Insbesondere ist es möglich, dass das Zusatzgas Behandlungsgas und/oder insbesondere an einem oberen Ende des Schachtofens austretendes Gichtgas aufweist. Hierzu ist insbesondere eine obere Ausgangsöffnung des Schachtofens über die Gichtleitung zur Rückführung von Gichtgasen mit der Zusatzöffnung verbunden. Ferner kann durch zugeleitetes Behandlungsgas die Reduktion auch im oberen Bereich des Schachtofens verbessert werden. Insbesondere können die atmosphärischen Bedingungen im Inneren des Schachtofens durch eine geeignete Wahl der Gichtgas- und//oder Behandlungsgas-Mengen individuell verändert werden. Dadurch kann beispielsweise bei Betriebsstörungen die Atmosphäre nachträglich optimiert und an sich verändernde Randbedingungen angepasst werden.

Die Erfindung betrifft ferner einen Schachtofen, insbesondere Hochofen, Kupolofen, Imperial-Smelter oder Müllverbrennungsofen, der eine Einrichtung zum Beschicken eines oberen Bereichs des Hochofens mit Rohmaterialien und mindestens eine untere Einleitungsöffnung zum Einleitung eines Behandlungsgases in einen unteren Bereich des Schachtofens aufweist, um einen Teil der Rohmaterialien unter Einwirkung der innerhalb des Schachtofens herrschenden Atmosphäre zu schmelzen und/oder zumindest teilweise zu reduzieren. Ferner ist eine Steuereinrichtung vorgesehen, die derart eingestellt ist, dass die Betriebsgrößen Druck p₁ und/oder Volumenstrom V̇₁ des Behandlungsgases innerhalb einer Zeitspanne von ≤ 40 s, insbesondere ≤ 20 s, bevorzugt ≤ 5 s und besonders bevorzugt ≤ 1 s eine Variation erfahren. Erfindungsgemäß ist mindestens eine zur unteren Einleitungsöffnung beabstandete Zusatzöffnung zur Einleitung eines Zusatzgases vorgesehen, wobei eine Zusatzsteuereinrichtung vorgesehen ist, die derart eingestellt ist, dass die Betriebsgrößen Druck p₂ und/oder Volumenstrom V̇₂ des Zusatzgases zumindest zeitweise variiert werden. Die Variation der Betriebsgrößen des Zusatzgases und/oder des Gichtgases erfolgt erfindungsgemäß derart, dass sich im Inneren des Schachtofens der Druck p₁ und/oder der Volumenstrom V̇₁ zumindest teilweise erhöht. Für einen Abstand d zwischen der unteren Einleitungsöffnung und der Zusatzöffnung bezogen auf eine Höhe h zwischen der unteren Einleitungsöffnung und einer oberen Ausgangsöffnung des Schachtofens gilt 0,1 ≤ d/h ≤ 1,0. Der Schachtofen ist insbesondere für das vorstehende beschriebene Verfahren geeignet. Vorzugsweise ist der Schachtofen wie vorstehend anhand des Verfahrens erläutert aus- und weitergebildet. Vorzugsweise ist eine mit dem Inneren des Schachtofens verbundene Gichtgasleitung zur Abfuhr gasförmiger Reaktionsprodukte ein Gichtgas vorgesehen, wobei eine Gichtsteuereinrichtung vorgesehen ist, die derart eingestellt ist, dass die Betriebsgrößen Druck p₃ und/oder Volumenstrom V̇₃ des Gichtgases zumindest zeitweise variiert werden.

Da sich mit Hilfe der Steuereinrichtungen die Druck- und/oder Volumenstromänderungen der eingeleiteten Gase im Inneren des Schachtofens derart überlagern können, dass sich der Druck und/oder der Volumenstrom im Inneren des Schachtofens zumindest teilweise addieren, wird eine Verbesserung der Effizienz des Schachtofens erreicht. Es wird angenommen, dass durch die Druck- und/oder Volumenstromspitzen die Bewegung des Behandlungsgases vergrößerte Anteile einer ZickZack-Bewegung aufweist, wodurch die Durchgasung verbessert wird. Dies führt im Ergebnis dazu, dass das Behandlungsgas vollständiger reagieren kann, so dass mit weniger Behandlungsgas mehr Material geschmolzen und/oder reduziert werden kann.

Nachfolgend wird die Erfindung anhand bevorzugter Ausführungsbeispiele näher erläutert.

Es zeigen:
- Fig. 1:: eine schematische Seitenansicht eines erfindungsgemäßen Schachtofens und
- Fig. 2:: eine schematische Seitenansicht eines erfindungsgemäßen Schachtofens in einer weiteren Ausführungsform.

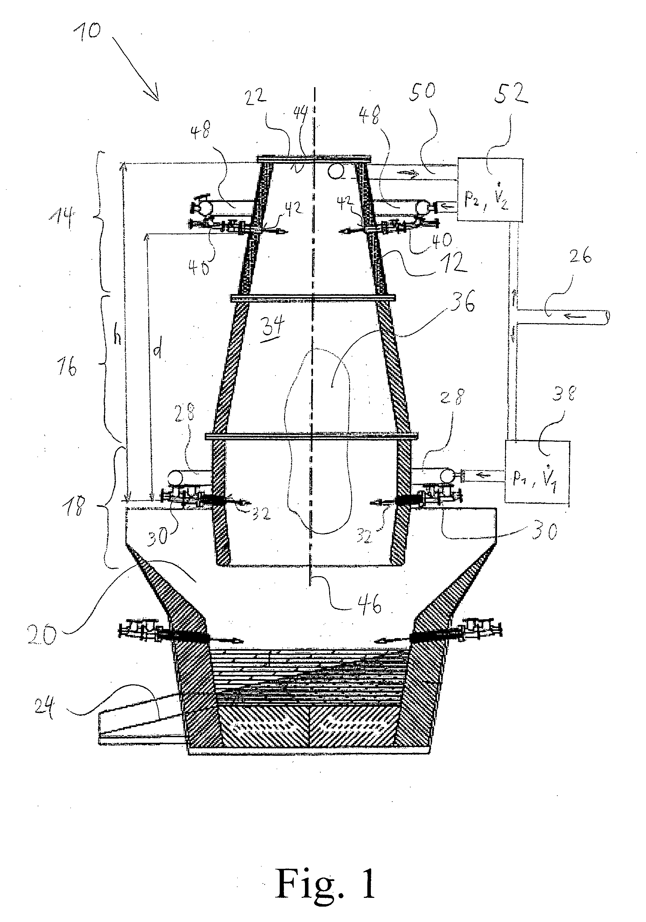

Der in Fig. 1 dargestellte Schachtofen 10 weist einen im Wesentlichen rohrförmigen Schachtofenkörper 12 auf, der sich grob in ein oberes Drittel 14, ein mittleres Drittel 16 und ein unteres Drittel 18 unterteilen lässt. An das untere Drittel 18 schließt sich ein Sumpf 20 an, der das über eine Klappe 22 in das obere Drittel 14 gegebene Material im geschmolzenen Zustand aufnimmt und über einen Ablauf 24 abgibt.

Über eine Zuleitung 26 wird Behandlungsgas über eine zwischengeschaltete untere Ringleitung 28 an untere Düsen 30 geleitet, die das Behandlungsgas über eine untere Einleitungsöffnung 32 dynamisch moduliert in das Innere 34 des Schachtreaktors 10 einleiten. In der Nähe der Einleitungsöffnungen 32 bildet sich eine als "raceway" oder Wirbelzone bezeichnete Reaktionszone aus, die eine als "toter Mann" 36 bezeichnete Zone geringer Reaktivität im unteren Bereich umschließt. Zwischen der Zuleitung 26 und der Einleitungsöffnung 32 ist eine Steuereinrichtung 38 zwischengeschaltet, die derart eingestellt ist, dass die Betriebsgrößen Druck p₁ und/oder Volumenstrom V̇₁ des Behandlungsgases innerhalb einer Zeitspanne von ≤ 40 s, insbesondere ≤ 20 s, bevorzugt ≤ 5 s und besonders bevorzugt ≤ 1 s eine Variation erfahren. Die Steuereinrichtung 38 kann vergleichbar zu einem besonders schnell betriebenen Blasebalg funktionieren.

Vergleichbar zur Einleitung des Behandlungsgases in das untere Drittel 18 kann Zusatzgas im mittleren Drittel 16 und/oder im oberen Drittel 14 zugeführt werden, um durch eine Variation der Betriebsgrößen Druck p₂ und/oder Volumenstrom V̇₂ des Zusatzgases zumindest zeitweise im Inneren 34 des Schachtofens 10 eine Addition der Drücke p₁ und p₂ und/oder der Volumenströme V̇₁ und V̇₂ zu erreichen. Durch die erreichbaren Druck- und/oder Volumenstromspitzen kann der tote Mann 36 deutlich verkleinert werden, wodurch der Wirkungsgrad des Schachtofens 10 verbessert ist.

Das Zusatzgas wird im dargestellten Ausführungsbeispiel mit Hilfe oberer Düsen 40 über Zusatzöffnungen 42 in das Innere 34 des Schachtofens 10 dynamisch moduliert eingeleitet. Der Abstand d der Zusatzöffnungen 42 zu den unteren Einleitungsöffnungen 32 beträgt im dargestellten Ausführungsbeispiel im Wesentlichen ca. 80% des Abstands h zwischen der unteren Einleitungsöffnung 32 und einer durch die Klappe 22 verschließbare oberen Ausgangsöffnung 44 des Schachtofens 10. Der Schachtofenkörper 12 kann insbesondere zu einer Symmetrieachse 46 im Wesentlichen rotationssymmetrisch ausgestaltet sein.

Im dargestellten Ausführungsbeispiel sind die oberen Düsen 42 über eine obere Ringleitung 48 mit der Zuleitung 26 verbunden, so dass als Zusatzgas Behandlungsgas verwendet oder zumindest zugemischt werden kann. Ferner kann über eine im Bereich der oberen Ausgangsöffnung 44 einmündende Gichtleitung 50 Gichtgas dem Zusatzgas zumindest beigemischt werden. Zwischen der Zuleitung 26 bzw. der Gichtleitung 50 und der Zusatzöffnung 42 ist eine Zusatzsteuereinrichtung 52 vorgesehen, die derart eingestellt ist, dass die Betriebsgrößen Druck p2 und/oder Volumenstrom V̇₂ des Zusatzgases zumindest zeitweise derart variiert werden, dass sich im Inneren 34 des Schachtofens 10 die Drücke p₁ und p₂ und/oder die Volumenströme V̇₁ und V̇₂ zumindest teilweise addieren. Ferner können nicht dargestellte Rückschlagventile vorgesehen sein, die z. B. eine Kurzschlussstrtimung von dem unteren Bereich 18 in den oberen Bereich 14 am Schachtofenkörper 12 vorbei verhindern.

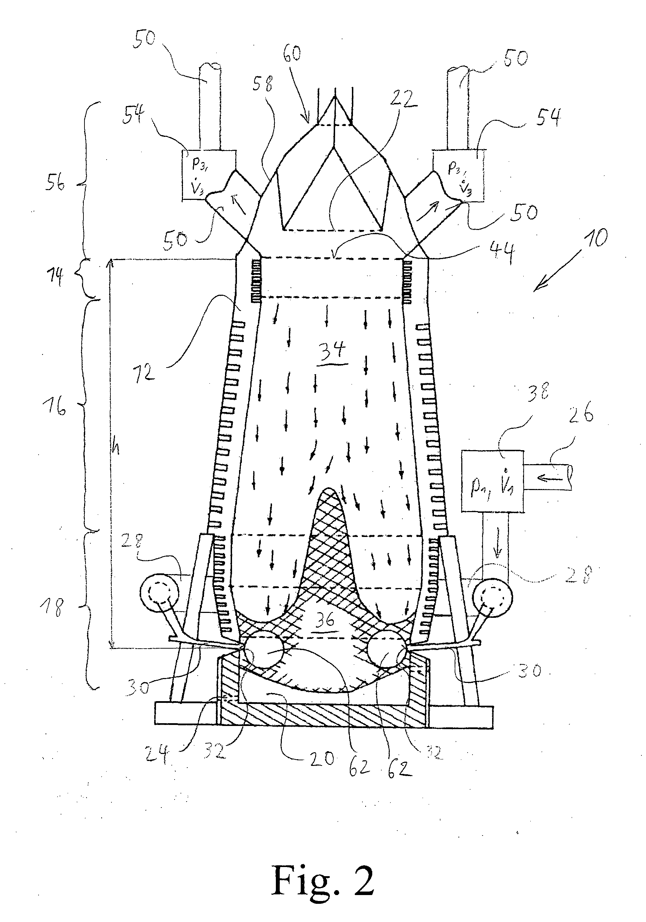

Bei dem in Fig. 2 dargestellten Schachtofen 10 wird im Vergleich zum in Fig. 1 dargestellten Schachtofen 10 die Überlagerung der Druck- und/oder Volumstromänderungen anstatt von Zusatzgas mit Hilfe von Gichtgas erreicht. Hierzu weist die mindestens eine Gichtleitung 50, die im dargestellten Ausführungsbeispiel mehr als einmal vorgesehen ist, um den abzuleitenden Volumenstrom aufzuteilen, jeweils eine Gichtsteuereinrichtung 54auf, um die in der Gichtleitung 50 bzw. kurz vor der Gichtleitung 50 vorherrschenden Betriebsgrößen Druck p₃ und/oder Volumenstrom V̇₃ zumindest zeitweise derart zu variieren, dass sich im Inneren 34 des Schachtofens 10 der Druck p₁ und/oder der Volumenstrom V̇₁ zumindest teilweise erhöht. Hierzu kann die Gichtsteuereinrichtung die Gichtgasleitung 50 beispielsweise mit Hilfe von Drosselklappen kurzzeitig zumindest teilweise verschließen, so dass sich ein sich erhöhender Staudruck einstellt, der durch ein anschließendes Öffnen der Gichtgasleitung 50 wieder abgebaut wird, bevor ein zulässiger Gesamtdruck überschritten wird.

Im dargestellten Ausführungsbeispiel wird das Gichtgas über Kopf, das heißt oberhalb der oberen Ausgangsöffnung 44 des Schachtofenkörpers 12 in die Gichtgasleitungen 50 abgeführt. Hierzu ist in einem Überkopfbereich 56 eine Haube 58 mit dem Schachtofenkörper 12 verbunden, mit dem die Gichtgasleitungen 50 verbunden sind. Die Haube 58 weist zusätzlich eine mit der Klappe 22 verschließbare Beschickungseinrichtung 60 auf, über welche die Rohmaterialien in das Innere 34 des Schachtofens 10 zugeführt werden, um im Inneren 34 des Schachtofens 10 nach unten zu sinken. Durch das über die Düsen 30 zugeführte Behandlungsgas ergibt sich eine im Wesentlichen ringförmige als "Raceway" bezeichnete Reaktionszone 62, die um den Toten Mann 36 herum angeordnet ist.

Besonders bevorzugt werden die in Fig. 1 und in Fig. 2 dargestellten Ausführungsformen miteinander kombiniert, so dass sowohl das zugeführte Zusatzgas als auch das abgeführte Gichtgas dynamisch moduliert werden, um durch Überlagerung der Druck- und/oder Volumenstromschwingungen zumindest zeitweise eine zumindest teilweise Erhöhung des Drucks und/oder des Volumenstroms im Inneren 34 des Schachtofens zu erreichen. Zusätzlich kann das bereits modulierte Gichtgas dem Zusatzgas zugeführt werden, wodurch sich weitere überlagerte Schwingungen ergeben, die sich ebenfalls resonanzartig aufschaukeln können, um zusätzliche Druck- und/oder Volumenstromspitzen zu induzieren.

## Patentansprüche

1. Verfahren zum Betreiben eines Schachtofens (10), bei dem ein oberer Bereich (14) des Schachtofens (10) mit Rohmaterialien beschickt wird, die unter Einfluss der Schwerkraft im Schachtofen absinken, wobei ein Teil der Rohmaterialien unter Einwirkung der innerhalb des Schachtofens herrschenden Atmosphäre geschmolzen und/oder zumindest teilweise reduziert wird,
und in einem unteren Bereich (18) des Schachtofens (10) über mindestens eine untere Einleitungsöffnung (32) ein Behandlungsgas eingeleitet wird, das die innerhalb des Schachtofens (10) herrschende Atmosphäre zumindest teilweise beeinflusst,
wobei die Einleitung des Behandlungsgases derart dynamisch moduliert wird, dass bei der Modulation die Betriebsgrößen Druck p₁ und/oder Volumenstrom V̇₁ zumindest zeitweise innerhalb einer Zeitspanne von ≤ 40 s variiert werden,
**dadurch gekennzeichnet, dass**
über mindestens eine zur unteren Einleitungsöffnung (32) beabstandete Zusatzöffnung (42) ein Zusatzgas eingeleitet wird, deren Betriebsgrößen Druck p₂ und/oder Volumenstrom V̇₂ zumindest zeitweise derart variiert werden, dass sich im Inneren (34) des Schachtofens (10) der Druck p₁ und/oder der Volumenstrom V̇₁ zumindest teilweise erhöht,
wobei für einen Abstand d zwischen der unteren Einleitungsöffnung (32) und der Zusatzöffnung (42) bezogen auf eine Höhe h zwischen der unteren Einleitungsöffnung (32) und einer oberen Ausgangsöffnung (44) des Schachtofens (10) 0,1 ≤ d/h ≤ 1,0 gilt.

2. Verfahren nach Anspruch 1, bei dem über eine mit dem Inneren (34) des Schachtofens (10) verbundene Gichtgasleitung (50) zur Abfuhr gasförmiger Reaktionsprodukte ein Gichtgas abgeleitet wird, deren Betriebsgrößen Druck p₃ und/oder Volumenstrom V̇₃ zumindest zeitweise derart variiert werden, dass sich im Inneren (34) des Schachtofens (10) der Druck p₁ und/oder Volumenstrom V̇₁ zumindest teilweise erhöht.

3. Verfahren nach Anspruch 1 oder 2, bei dem die Einleitung des Zusatzgases und/oder die Ableitung des Gichtgases derart dynamisch moduliert wird, dass bei der Modulation die Betriebsgrößen Druck p₂ und/oder Volumenstrom V̇₂ und/oder Druck p₃ und/oder Volumenstrom V̇₃ zumindest zeitweise innerhalb einer Zeitspanne von ≤ 40 s variiert werden.

4. Verfahren nach einem der Ansprüche 1 bis 3, bei dem für einen Abstand d zwischen der unteren Einleitungsöffnung (32) und der Zusatzöffnung (42) bezogen auf eine Höhe h zwischen der unteren Einleitungsöffnung (32) und einer oberen Ausgangsöffnung (44) des Schachtofens (10) 0,25 ≤ d/h ≤ 1,0 gilt.

5. Verfahren nach einem der Ansprüche 1 bis 4, bei dem die Modulation des Behandlungsgases und/oder des Zusatzgases und/oder des Gichtgases quasi-periodisch oder periodisch oder harmonisch erfolgt, wobei für die Periodendauer T 40 s ≥ T ≥ 60 ms gilt.

6. Verfahren nach einem der Ansprüche 1 bis 5, bei dem die Modulation des Behandlungsgases und/oder des Zusatzgases und/oder des Gichtgases pulsationsartig erfolgt, wobei für eine Pulsbreite σ eines Pulses 5 s ≥ σ > 1 ms gilt.

7. Verfahren nach einem der Ansprüche 1 bis 6, bei dem die Drücke p₁ und/oder p₂ und/oder p₃ und/oder der Volumenströme V̇₁ und/oder V̇₂ und/oder V̇₃ derart variiert werden, dass innerhalb des Schachtofens eine überlagerte Schwingung mit einer Phasendifferenz ϕ von -π/2 ≤ ϕ ≤ π/2 entsteht.

8. Verfahren nach einem der Ansprüche 1 bis 7, bei dem das Zusatzgas Behandlungsgas und/oder an einem oberen Ende (44) des Schachtofens (10) austretendes Gichtgas aufweist.

9. Verfahren nach einem der Ansprüche 1 bis 8, bei dem die Amplitude der Drücke p₁ und/oder p₂ und/oder p₃ und/oder der Volumenströme V̇₁ und/oder V̇₂ und/oder V̇₃ bezogen auf den Mittelwert 10% - 1 000% beträgt.

10. Schachtofen mit
einer Einrichtung (60) zum Beschicken eines oberen Bereichs (14) des Schachtofens (10) mit Rohmaterialien,
mindestens einer unteren Einleitungsöffnung (32) zum Einleitung eines Behandlungsgases in einen unteren Bereich (18) des Schachtofens (10), um einen Teil der Rohmaterialien unter Einwirkung der innerhalb des Schachtofens (10) herrschenden Atmosphäre zu schmelzen und/oder zumindest teilweise zu reduzieren, und
einer Steuereinrichtung (38), die derart eingestellt ist, dass die Betriebsgrößen Druck p₁ und/oder Volumenstrom V̇₁ des Behandlungsgases innerhalb einer Zeitspanne von ≤ 40 s eine Variation erfahren,
**dadurch gekennzeichnet, dass**
mindestens eine zur unteren Einleitungsöffnung (32) beabstandete Zusatzöffnung (42) zur Einleitung eines Zusatzgases vorgesehen ist, wobei eine Zusatzsteuereinrichtung (52) vorgesehen ist, die derart eingestellt ist, dass die Betriebsgrößen Druck p₂ und/oder Volumenstrom V̇₂ des Zusatzgases zumindest zeitweise derart variiert werden, dass sich im Inneren (34) des Schachtofens (10) der Druck p₁ und/oder der Volumenstrom V̇₁ zumindest teilweise erhöht,
wobei für einen Abstand d zwischen der unteren Einleitungsöffnung (32) und der Zusatzöffnung (42) bezogen auf eine Höhe h zwischen der unteren Einleitungsöffnung (32) und einer oberen Ausgangsöffnung (44) des Schachtofens (10) 0,1 ≤ d/h ≤ 1,0 gilt.

11. Schachtofen nach Anspruch 10, **dadurch gekennzeichnet, dass** eine mit dem Inneren (34) des Schachtofens (10) verbundene Gichtgasleitung (50) zur Abfuhr gasförmiger Reaktionsprodukte ein Gichtgas vorgesehen ist, wobei eine Gichtsteuereinrichtung (54) vorgesehen ist, die derart eingestellt ist, dass die Betriebsgrößen Druck p3 und/oder Volumenstrom V̇₃ des Gichtgases zumindest zeitweise derart variiert werden, dass sich im Inneren (34) des Schachtofens (10) der Druck p₁ und/oder Volumenstrom V̇₁ zumindest teilweise erhöht.

12. Schachtofen nach Anspruch 10 oder 11, **dadurch gekennzeichnet, dass** für einen Abstand d zwischen der unteren Einleitungsöffnung (32) und der Zusatzöffnung (42) bezogen auf eine Höhe h zwischen der unteren Einleitungsöffnung (32) und einer oberen Ausgangsöffnung (44) des Schachtofens (10) 0,25 ≤ d/h ≤ 1,0 gilt.

13. Schachtofen nach einem der Ansprüche 10 bis 12, **dadurch gekennzeichnet, dass** eine obere Ausgangsöffnung (44) des Schachtofens (10) über die Gichtleitung (50) zur Rückführung von Gichtgasen mit der Zusatzöffnung (42) verbunden ist.

14. Schachtofen nach einem der Ansprüche 10 bis 13, **dadurch gekennzeichnet, dass** eine Tauchleitung vorgesehen ist, die in das Innere (34) des Schachtofens (10) eintaucht und auf einer definierten Höhe des Schachtofens (10) die Zusatzöffnung (42) ausbildet.

## Claims

1. Method for operating a shaft furnace (10), in which an upper region (14) of the shaft furnace (10) is charged with raw materials which fall in the shaft furnace under the influence of gravity, some of the raw materials being melted and/or at least partially reduced under the action of the atmosphere prevailing inside the shaft furnace,
and a treatment gas is introduced in a lower region (18) of the shaft furnace (10) via at least one lower introduction orifice (32) and at least partially influences the atmosphere prevailing inside the shaft furnace (10),
the introduction of the treatment gas being modulated dynamically in such a way that, during modulation, the operating variables, pressure p₁ and/or volume flow V̇₁, are varied at least temporarily within a timespan of ≤ 40 s,
**characterized in that**,
via at least one additional orifice (42) spaced apart from the lower introduction orifice (32), an additional gas is introduced, of which the operating variables, pressure p₂ and/or volume flow V̇₂, are varied at least temporarily in such a way that the pressure p₁ and/or the volume flow V̇₁ are at least partially increased in the interior (34) of the shaft furnace (10),
a spacing d between the lower introduction orifice (32) and the additional orifice (42) being, in relation to a height h between the lower introduction orifice (32) and an upper outlet orifice (44) of the shaft furnace (10), 0.1 ≤ d/h ≤ 1.0.

2. Method according to Claim 1, in which, via a throat-gas line (50), connected to the interior (34) of the shaft furnace (10), for the discharge of gaseous reaction products, a throat gas is removed, of which the operating variables, pressure p₃ and/or volume flow V̇₃, are varied at least temporarily in such a way that the pressure p₁ and/or volume flow V̇₁ are/is at least partially increased in the interior (34) of the shaft furnace (10).

3. Method according to Claim 1 or 2, in which the introduction of the additional gas and/or the removal of the throat gas are/is modulated dynamically in such a way that, during modulation, the operating variables, pressure p₂ and/or volume flow V̇₂ and/or pressure p₃ and/or volume flow V̇₃, are varied at least temporarily within a timespan of ≤ 40 s.

4. Method according to one of Claims 1 to 3, in which a spacing d between the lower introduction orifice (32) and the additional orifice (42) is, in relation to a height h between the lower introduction orifice (32) and an upper outlet orifice (44) of the shaft furnace (10), 0.25 ≤ d/h ≤ 1.0.

5. Method according to one of Claims 1 to 4, in which the modulation of the treatment gas and/or of the additional gas and/or of the throat gas takes place quasi-periodically or periodically or harmonically, the period duration T being 40 s ≥ T ≥ 60 ms.

6. Method according to one of Claims 1 to 5, in which the modulation of the treatment gas and/or of the additional gas and/or of the throat gas takes place in a pulsation-like manner, a pulse width σ of a pulse being 5 s ≥ σ ≥ 1ms.

7. Method according to one of Claims 1 to 6, in which the pressures p₁ and/or p₂ and/or p₃ and/or the volume flows V̇₁ and/or V̇₂ and/or V̇₃ are varied in such a way that a superposed oscillation with a phase difference ϕ of -π/2 ≤ ϕ ≤ π/2 occurs inside the shaft furnace.

8. Method according to one of Claims 1 to 7, in which the additional gas has treatment gas and/or throat gas emerging at an upper end (44) of the shaft furnace (10).

9. Method according to one of Claims 1 to 8, in which the amplitude of the pressures p₁ and/or p₂ and/or p₃ and/or of the volume flows V̇₁ and/or V̇₂ and/or V̇₃ amounts in relation to the average value to 10%-1 000%.

10. Shaft furnace, with
a device (60) for charging an upper region (14) of the shaft furnace (10) with raw materials,
at least one lower introduction orifice (32) for introducing a treatment gas into a lower region (18) of the shaft furnace (10), in order to melt and/or at least partially reduce some of the raw materials under the action of the atmosphere prevailing inside the shaft furnace (10), and
a control device (38) which is set in such a way that the operating variables, pressure p₁ and/or volume flow V̇₁, of the treatment gas experience a variation within a timespan of ≤ 40 s,
**characterized in that**
at least one additional orifice (42), spaced apart from the lower introduction orifice (32), for introducing an additional gas is provided, an additional control device (52) being provided, which is set in such a way that the operating variables, pressure p₂ and/or volume flow V̇₂, of the additional gas are varied at least temporarily in such a way that the pressure p₁ and/or the volume flow V̇₁ are/is at least partially increased in the interior (34) of the shaft furnace (10),
a spacing d between the lower introduction orifice (32) and the additional orifice (42) being, in relation to a height h between the lower introduction orifice (32) and an upper outlet orifice (44) of the shaft furnace (10), 0.1 ≤ d/h ≤ 1.0.

11. Shaft furnace according to Claim 10, **characterized in that**, via a throat-gas line (50), connected to the interior (34) of the shaft furnace (10), for the discharge of gaseous reaction products, a throat gas is provided, a throat gas control device (54) being provided which is set in such a way that the operating variables, pressure p₃ and/or volume flow V̇₃, of the throat gas are varied at least temporarily in such a way that the pressure p₁ and/or volume flow V̇₁ are/is at least partially increased in the interior (34) of the shaft furnace (10).

12. Shaft furnace according to Claim 10 or 11, **characterized in that** a spacing d between the lower introduction orifice (32) and the additional orifice (42) is, in relation to a height h between the lower introduction orifice (32) and an upper outlet orifice (44) of the shaft furnace (10), 0.25 ≤ d/h ≤ 1.0.

13. Shaft furnace according to one of Claims 10 to 12, **characterized in that** an upper outlet orifice (44) of the shaft furnace (10) is connected to the additional orifice (42) via the throat gas line (50) for the recirculation of throat gases.

14. Shaft furnace according to one of Claims 10 to 13, **characterized in that** a plunge line is provided, which plunges into the interior (34) of the shaft furnace (10) and forms the additional orifice (42) at a defined height of the shaft furnace (10).

## Revendications

1. Procédé pour faire fonctionner un four à cuve (10), selon lequel une zone supérieure (14) du four à cuve (10) est alimentée avec des matières premières qui s'enfoncent dans le four à cuve sous l'effet de la gravité, une partie des matières premières étant fondue et/ou au moins partiellement réduite sous l'effet de l'atmosphère qui règne à l'intérieur du four à cuve,
et un gaz de traitement est introduit dans une zone inférieure (18) du four à cuve (10) par le biais d'au moins une ouverture d'introduction inférieure (32), lequel influence au moins partiellement l'atmosphère qui règne à l'intérieur du four à cuve (10), l'introduction du gaz de traitement étant modulée dynamiquement de sorte que lors de la modulation, les grandeurs opérationnelles Pression p₁ et/ou Débit volumique V₁ varient au moins temporairement à l'intérieur d'un intervalle de temps ≤ 40 s, **caractérisé en ce**
**qu'**un gaz supplémentaire est introduit par le biais d'au moins une ouverture supplémentaire (42) espacée de l'ouverture d'introduction inférieure (32), gaz supplémentaire dont les grandeurs opérationnelles Pression p₂ et/ou Débit volumique V₂ varient au moins temporairement de telle sorte que la Pression p₁ et/ou le Débit volumique V₁ augmentent au moins partiellement à l'intérieur (34) du four à cuve (10),
la relation 0,1 ≤ d/h ≤ 1,0 étant vérifiée pour un écart d entre l'ouverture d'introduction inférieure (32) et l'ouverture supplémentaire (42) en référence à une hauteur h entre l'ouverture d'introduction inférieure (32) et une ouverture de sortie (44) supérieure du four à cuve (10).

2. Procédé selon la revendication 1, selon lequel un gaz de haut-fourneau est évacué par le biais d'une conduite à gaz de haut-fourneau (50) reliée avec l'intérieur (34) du four à cuve (10) pour l'évacuation des produits de réaction gazeux, dont les grandeurs opérationnelles Pression p₃ et/ou Débit volumique V₃ varient au moins temporairement de telle sorte que la Pression p₁ et/ou le Débit volumique V₁ augmentent au moins partiellement à l'intérieur (34) du four à cuve (10).

3. Procédé selon la revendication 1 ou 2, selon lequel l'introduction du gaz supplémentaire et/ou l'évacuation du gaz de haut-fourneau est modulée dynamiquement de telle sorte que lors de la modulation, les grandeurs opérationnelles Pression p₂ et/ou Débit volumique V₂ et/ou Pression p₃ et/ou Débit volumique V₃ varient au moins temporairement à l'intérieur d'un intervalle de temps ≤ 40 s.

4. Procédé selon l'une des revendications 1 à 3, selon lequel la relation 0,25 ≤ d/h ≤ 1,0 est vérifiée pour un écart d entre l'ouverture d'introduction inférieure (32) et l'ouverture supplémentaire (42) en référence à une hauteur h entre l'ouverture d'introduction inférieure (32) et l'ouverture de sortie (44) supérieure du four à cuve (10).

5. Procédé selon l'une des revendications 1 à 4, selon lequel la modulation du gaz de traitement et/ou du gaz supplémentaire et/ou du gaz de haut-fourneau s'effectue quasi-périodiquement ou périodiquement ou harmoniquement, la durée de la période T étant définie selon 40 s ≥ T ≥ 60 ms.

6. Procédé selon l'une des revendications 1 à 5, selon lequel la modulation du gaz de traitement et/ou du gaz supplémentaire et/ou du gaz de haut-fourneau s'effectue de manière impulsionnelle, une largeur d'impulsion σ d'une impulsion étant définie selon 5 s ≥ σ ≥ 1 ms.

7. Procédé selon l'une des revendications 1 à 6, selon lequel les pressions p₁ et/ou p₂ et/ou p₃ et/ou les débits volumiques V₁ et/ou V₂ et/ou V₃ varient de telle sorte qu'à l'intérieur du four à cuve règne une oscillation superposée ayant une différence de phase ϕ définie selon -π/2 ≤ ϕ ≤ π/2.

8. Procédé selon l'une des revendications 1 à 7, selon lequel le gaz supplémentaire présente du gaz de traitement et/ou un gaz de haut-fourneau qui s'échappe au niveau d'une extrémité supérieure (44) du four à cuve (10).

9. Procédé selon l'une des revendications 1 à 8, selon lequel l'amplitude des pressions p₁ et/ou p₂ et/ou p₃ et/ou des débits volumiques V₁ et/ou V₂ et/ou V₃ est comprise entre 10 % et 1000 % en référence à une valeur moyenne.

10. Four à cuve comprenant
un dispositif (60) pour alimenter une zone supérieure (14) du four à cuve (10) avec des matières premières,
au moins une ouverture d'introduction inférieure (32) destinée à l'introduction d'un gaz de traitement dans une zone inférieure (18) du four à cuve (10) afin de faire fondre et/ou de réduire au moins partiellement une partie des matières premières sous l'effet de l'atmosphère qui règne à l'intérieur du four à cuve (10),
un dispositif de commande (38) qui est réglé de telle sorte que les grandeurs opérationnelles Pression p₁ et/ou Débit volumique V₁ du gaz de traitement subissent une variation à l'intérieur d'un intervalle de temps ≤ 40 s,
**caractérisé en ce**
**qu'**il est prévu au moins une ouverture supplémentaire (42) espacée de l'ouverture d'introduction inférieure (32) pour l'introduction d'un gaz supplémentaire, un dispositif de commande supplémentaire (52) étant prévu, lequel est réglé de telle sorte que les grandeurs opérationnelles Pression p₂ et/ou Débit volumique V₂ du gaz supplémentaire varient au moins temporairement de telle sorte que la Pression p₁ et/ou le Débit volumique V₁ augmentent au moins partiellement à l'intérieur (34) du four à cuve (10),
la relation 0,1 ≤ d/h ≤ 1,0 étant vérifiée pour un écart d entre l'ouverture d'introduction inférieure (32) et l'ouverture supplémentaire (42) en référence à une hauteur h entre l'ouverture d'introduction inférieure (32) et une ouverture de sortie (44) supérieure du four à cuve (10).

11. Four à cuve selon la revendication 10, **caractérisé en ce qu'**il est prévu une conduite à gaz de haut-fourneau (50) reliée avec l'intérieur (34) du four à cuve (10) pour l'évacuation des produits de réaction gazeux d'un gaz de haut-fourneau, un dispositif de commande de gueulard (54) étant prévu, lequel est réglé de telle sorte que les grandeurs opérationnelles Pression p₃ et/ou Débit volumique V₃ du gaz de haut-fourneau varient au moins temporairement de telle sorte que la Pression p₁ et/ou le Débit volumique V₁ augmentent au moins partiellement à l'intérieur (34) du four à cuve (10).

12. Four à cuve selon la revendication 10 ou 11, **caractérisé en ce que** la relation 0,25 ≤ d/h ≤ 1,0 est vérifiée pour un écart d entre l'ouverture d'introduction inférieure (32) et l'ouverture supplémentaire (42) en référence à une hauteur h entre l'ouverture d'introduction inférieure (32) et une ouverture de sortie (44) supérieure du four à cuve (10).

13. Four à cuve selon l'une des revendications 10 à 12, **caractérisé en ce qu'**une ouverture de sortie (44) supérieure du four à cuve (10) est reliée avec l'ouverture supplémentaire (42) par le biais de la conduite à gaz de haut-fourneau (50) pour l'évacuation des gaz de haut fourneau.

14. Four à cuve selon l'une des revendications 10 à 13, **caractérisé en ce qu'**il est prévu une conduite plongeante qui plonge à l'intérieur (34) du four à cuve (10) et qui forme l'ouverture supplémentaire (42) à une hauteur définie du four à cuve (10).
